# DEMANDE DE BREVET EUROPEEN

(11) **EP 1 033 724 A1**
(43) Date de publication de la demande: **06.09.2000**
(21) Numéro de dépôt: 00400526.0
(22) Date de dépôt: 28.02.2000
(51) Int. Cl.: H01B 7/295, H01B 7/28

(54) **Câble d'énergie comprenant au moins une couche de revêtement en composant nanocomposite**

(30) Priorité: 04.03.1999 FR 9902686
(71) Demandeur: ALCATEL, 75008 Paris (FR)
(72) Inventeur: Prigent, Madeleine, 91460 Marcoussis (FR); Amigouet, Pascal, 91790 Boissy Saint Yon (FR)
(74) Mandataire: Laroche, Danièle

(57) **Abrégé**

L'invention concerne un câble d'énergie (1) comprenant une âme (2) en matériau conducteur et au moins une couche de revêtement (4), caractérisé en ce que ladite couche (4) est constituée essentiellement d'un matériau comprenant un composé inorganique à structure feuilletée et un composé organique inséré entre les feuillets dudit composé inorganique.

## Description

L'invention concerne un câble d'énergie ayant des caractéristiques mécaniques, thermiques, électriques ou de tenue au feu sensiblement améliorées par rapport aux câbles actuellement connus. On entend par câble d'énergie tout conducteur électrique destiné à transporter de l'énergie électrique et comprenant au moins une couche de revêtement ou gaine.

L'invention concerne plus particulièrement le matériau inclus dans au moins l'une des couches de revêtement placée autour dudit conducteur électrique.

Les câbliers ont des soucis constants d'amélioration des caractéristiques ci-dessus énumérées et également de la diminution de poids pour les câbles embarqués.

Outre les soucis d'améliorer les caractéristiques des matériaux utilisés, les câbliers recherchent des solutions pouvant s'intégrer facilement dans les chaînes de production existantes telles que la fabrication de câble par extrusion des polymère à l'état fondu autour de l'âme conductrice, ou la fabrication de fils isolés par réticulation d'un polymère à l'état liquide ou en solution.

Le revêtement a pour rôle de protéger l'âme conductrice vis à vis des agressions mécaniques extérieures, la pénétration d'humidité et si nécessaire d'assurer une isolation électrique. En outre en cas d'incendie il doit permettre une résistance suffisante au feu. Actuellement la plupart de ces revêtements comportent une matrice continue, généralement en polymère, contenant éventuellement des particules d'une charge qui peut être inorganique, tel le mélange polymère/montmorillonite pour câble électrique décrit dans la demande de brevet GB-A-2.1 13.453.

Le but de la présente invention est de proposer un câble d'énergie présentant de sensibles améliorations des caractéristiques ci-dessus décrites, grâce à la présence d'au moins une couche de revêtement dans laquelle on a introduit ou polymérisé in situ un composant nanocomposite utilisable dans les procédés industriels de fabrication existants. Un tel composant nanocomposite est par exemple décrit dans la demande de brevet WO-A-93/04.1 17.

L'invention concerne un câble d'énergie comprenant une âme en matériau conducteur, entourée d'au moins une couche de revêtement, caractérisé en ce que ladite couche est constituée essentiellement d'un matériau comprenant un composé inorganique à structure feuilletée et un composé organique inséré entre les feuillets dudit composé inorganique.

Actuellement des charges minérales sont fréquemment utilisées dans l'une ou l'autre des couches de revêtement des câbles, mais ces charges, dont la taille des particules est de l'ordre du micromètre (micron), sont dispersées dans un polymère et conservent leur taille initiale après malaxage avec ce polymère.

Selon la présente invention on utilise un composé inorganique à structure feuilletée qui, après un traitement spécifique, permettra l'intercalation d'un composé organique entre ses feuillets. Ce composé inorganique a une dimension initiale de particules de l'ordre du micron. Lorsqu'un composé organique est inséré entre les feuillets, le composé inorganique s'exfolie formant un matériau composite. Après l'intercalation du composé organique et l'exfoliation du composé inorganique, ce dernier est réparti de manière homogène dans le matériau composite et présente une dimension de particules de l'ordre du nanomètre. On observe alors une amélioration sensible des propriétés du matériau, ainsi que l'apparition de propriétés particulières. Ledit matériau est couramment appelé matériau ou composant nanocomposite.

Par "constitué essentiellement", on entend que la couche peut comporter en outre en moindre quantité des adjuvants destinés notamment à faciliter sa mise en forme (plastifiant, lubrifiant, etc...), à ralentir son vieillissement (stabilisant, absorbeur d'U.V., ignifugeant, anti-oxygène, agent anti-choc, etc...) ou à en modifier l'apparence (pigment coloré, etc...).

Le composé inorganique peut être choisi parmi un graphite et un oxyde minéral. On choisira du graphite si on souhaite obtenir un couche conductrice, et un oxyde minéral si l'on souhaite obtenir une couche qui soit électriquement isolante. Dans le cas présent, on choisit de préférence un oxyde. Parmi les oxydes minéraux, on pourra choisir par exemple un silicate comme l'amiante (silicate hydraté), un feldspath (silicate double d'aluminium et d'un métal alcalin ou alcalino-terreux), un silicate de magnésium comme un talc ou stéatite, ou la serpentine (silicate de magnésium), un silico-aluminate comme un mica (biotite, muscovite, phlogopite) ou une argile, une alumine, un titanate ou une zircone, à condition qu'il présente une structure feuilletée.

De préférence l'oxyde inorganique est un silicate et de préférence encore un aluminosilicate comme une argile naturelle ou artificielle, éventuellement pontée. De préférence l'argile présente une structure cristalline formée d'un empilement de feuillets et possède des ions OH- superficiels. Parmi les argiles, on pourra choisir le kaolin (aluminium silicate dihydraté), la smectite, la montmorillonite, la bentonite, la beidellite, la nontronite, la saponite, l'hectorite, la vermiculite, la wollastonite ou un mélange quelconque de plusieurs argiles.

Selon un mode préférentiel de réalisation de la présente invention, l'argile choisie est la montmorillonite, aussi appelée "Fullers earth" lorsqu'elle contient du calcium et connue aussi sous le nom de bentonite lorsqu'elle contient du sodium.

Le composé organique intercalé entre les feuillets du composé inorganique est de préférence un polymère, un oligomère ou un monomère qu'on polymérisera in situ.

Dans un procédé de fabrication de câble par extrusion, on utilisera un polymère extrudable qui peut être choisi parmi une polyoléfine comme le polyéthylène (PE) et le polypropylène (PP), le polytéréphtalate de butylène (PBTP), un polymère vinylique comme le chlorure de polyvinyle (PVC), un élastomère qui peut être halogéné ou non, ou bien encore thermoplastique, un silicone, leurs copolymères comme les copolymères de l'éthylène, et un mélange des précédents. Parmi les copolymères de l'éthylène on peut choisir un copolymère d'éthylène et d'acétate de vinyle (EVA), un copolymère d'éthylène et de propylène (EPR), un copolymère d'éthylène et d'acrylate d'alkyle comme le copolymère d'éthylène et d'acrylate d'éthyle (EEA) ou d'acrylate de méthyle (EMA), un copolymère d'éthylène et d'acide acrylique, un terpolymère de l'éthylène, ou ces mêmes polymères comportant des groupements fonctionnels spécifiques (acides, époxy, etc...).

Dans un procédé de fabrication de câble mettant en oeuvre les polymères à l'état liquide, on utilisera un polymère choisi parmi une résine époxy, un polyester, un polyimide, comme un polyétherimide ou un polyamidimide, un polyamide (PA), un polyuréthane, un silicone, un copolymère ou un mélange des polymères précédemment cités.

La couche de revêtement peut être uniquement constituée d'un matériau isolant.

La couche de revêtement peut être constituée d'une couche de matériau isolant, entourée d'une couche de revêtement externe de protection

Le matériau isolant peut être au moins partiellement constitué dudit matériau nanocomposite comprenant un composé inorganique à structure feuilletée et un composé organique inséré entre les feuillets dudit composé inorganique.

La couche de revêtement externe peut être au moins partiellement constituée dudit matériau nanocomposite comprenant un composé inorganique à structure feuilletée et un composé organique inséré entre les feuillets dudit composé inorganique.

Le câble peut être un câble d'énergie Moyenne à Haute Tension continue, la couche de revêtement comprenant au moins un écran semi-conducteur. L'écran semi-conducteur peut être essentiellement constitué dudit matériau nanocomposite comprenant un composé inorganique à structure feuilletée et un composé organique inséré entre les feuillets dudit composé inorganique.

L'invention a aussi pour objet un procédé de fabrication d'un câble tekl que décrit ci-dessus, réalisé selon les étapes suivantes :
- on traite le composé inorganique par un agent de manière à assurer sa compatibilité avec le composé organique,
- on mélange le composé inorganique traité avec le composé organique à une température supérieure à la température de ramollissement ou de fusion du composé organique, et
- on obtient le matériau, le composé organique étant insérée entre les feuillets du composé inorganique.

Le composé inorganique est traité avec un agent tensioactif compatible avec le composé organique de façon à favoriser l'intercalation du composé organique entre les feuillets du composé inorganique.

Selon un mode de réalisation de la présente invention, le composé inorganique est une argile et l'agent compatibilisant est choisi parmi un sel d'ammonium quaternaire, un oxyde de polyéthylène et un dérivé phosphoré.

D'autres avantages et caractéristiques de la présente invention résulteront de la description qui va suivre en référence aux dessins annexés dans lesquels :

La figure 1 est une représentation schématique en coupe transversale d'un câble d'énergie selon un mode de réalisation de la présente invention.

La figure 2 est une représentation schématique en coupe transversale d'un câble d'énergie selon un autre mode de réalisation de la présente invention.

La figure 3 est une représentation schématique en coupe transversale d'un câble d'énergie selon un autre mode de réalisation de la présente invention.

L'invention concerne un câble d'énergie 1 comprenant une âme 2 en matériau conducteur, entourée d'une gaine 3 constituée d'une couche de revêtement 4.

Selon l'invention, la couche 4 est constituée essentiellement d'un matériau nanocomposite comprenant un composé inorganique à structure feuilletée et un composé organique inséré entre les feuillets dudit composé inorganique.

Si l'on souhaite avoir un matériau nanocomposite ayant des caractéristiques semi-conductrices ledit composé inorganique pourra être, par exemple, du graphite.

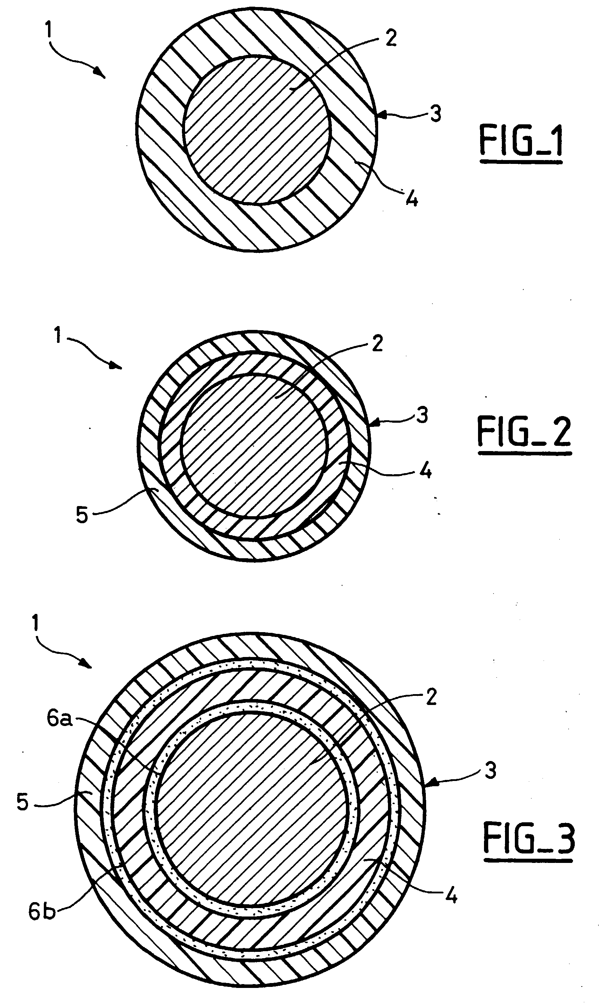

Dans le mode de réalisation représenté sur la figure 1, le câble d'énergie 1 en résultant, qui est un fils électrique isolé, a une tenue au feu, et, une résistance à l'eau et aux solvants sensiblement améliorées.

Dans le mode de réalisation représenté sur la figure 2, la gaine 3 est constituée, outre la couche de matériau isolant 4, d'un revêtement extérieur de protection 5. La couche de matériau isolant 4 ou le revêtement externe 5 peuvent être au moins constitués essentiellement dudit matériau nanocomposite.

Le mode de réalisation de la figure 2 est typique des câbles AC basse tension. L'intégration de ce matériau nanocomposite dans la couche 4 de matériau isolant et/ou dans le revêtement externe 5, permet une augmentation sensible des caractéristiques mécaniques, de tenue et de propagation au feu, et une amélioration sensible de l'imperméabilité à l'eau et aux solvants.

Dans un mode de réalisation représenté sur la figure 3, le câble d'énergie est un câble Moyenne à Haute Tension continue, et, outre la couche de matériau isolant 4 et le revêtement extérieur de protection 5, la gaine 3 comprend au moins un écran semi-conducteur 6a, 6b. L'écran semi-conducteur peut être constitué essentiellement dudit matériau nanocomposite.

Le mécanisme de formation du matériau nanocomposite et l'extrusion de celui-ci favorisant l'orientation du composé organique, par exemple le polymère, limitent la migration de charges d'espace.

De ce fait l'introduction de matériau nanocomposite dans la couche 4 de matériau isolant d'un câble DC moyenne ou Haute Tension, permet d'améliorer la résistance au claquage du câble lors d'un changement de polarité.

Le mécanisme de formation du matériau nanocomposite permettant d'abaisser le seuil de percolation du mélange, cela permet de baisser sensiblement le taux du composé organique dans le composé inorganique. De ce fait, l'utilisation d'un écran semi-conducteur interne 6a constitué essentiellement d'un matériau nanocomposite, par exemple à base de graphite, améliore sensiblement l'interface entre l'âme conductrice et la couche isolante

Enfin, l'introduction de matériau nanocomposite, par exemple à base de silicate ou d'argile silicatée, dans l'écran semi-conducteur externe 6b et/ou la gaine extérieure 4, permet une augmentation sensible des caractéristiques de tenue et de propagation au feu, et une amélioration sensible de l'imperméabilité à l'eau et aux solvants.

Bien entendu, l'invention n'est pas limitée aux modes de réalisation décrit et représenté, mais elle est susceptible de nombreuses variantes accessibles à l'homme du métier sans que l'on s'écarte de l'invention. En particulier, la structure des câbles peut être celle de n'importe quel câble d'énergie connu, de même la disposition du matériau nanocomposite dans le câble peut être envisagée partout où il y aurait un isolant, un écran semi-conducteur, une gaine de protection.

## Revendications

1. Câble d'énergie comprenant une âme en matériau conducteur et au moins une couche de revêtement, caractérisé en ce que ladite couche est constituée essentiellement d'un matériau comprenant un composé inorganique à structure feuilletée et un composé organique inséré entre les feuillets dudit composé inorganique.

2. Câble d'énergie selon la revendication 1, dans lequel ledit composé inorganique est un oxyde minéral.

3. Câble d'énergie selon la revendication 2, dans lequel ledit oxyde minéral est une argile choisie parmi le kaolin, la smectite, la montmorillonite, la bentonite, la beidellite, la nontronite, la saponite, l'hectorite, la vermiculite, la wollastonite ou un mélange des précédentes.

4. Câble d'énergie selon la revendication 3, dans lequel ladite argile est choisie parmi la montmorillonite et la bentonite.

5. Câble d'énergie selon l'une des revendications précédentes, dans lequel ledit composé organique est un polymère, un monomère ou un oligomère.

6. Câble d'énergie selon la revendication 5, dans lequel ledit polymère est choisi parmi une polyoléfine, un polytéréphtalate de butylène, un polymère vinylique, un élastomère, un silicone, leurs copolymères et un mélange des précédents.

7. Câble d'énergie selon la revendication 5, dans lequel ledit polymère est choisi parmi une résine époxy, un polyester, un polyamide, un polyimide, un polyétherimide, un polyamidimide, un polyuréthane, un silicone ou un mélange des précédents.

8. Câble d'énergie selon l'une des revendications précédentes tel que la couche de revêtement comprend une couche de matériau isolant constituée essentiellement d'un matériau comprenant un composé inorganique à structure feuilletée et un composé organique inséré entre les feuillets dudit composé inorganique.

9. Câble d'énergie selon l'une des revendications précédentes tel que la couche de revêtement comprend une couche de revêtement externe constituée essentiellement d'un matériau comprenant un composé inorganique à structure feuilletée et un composé organique inséré entre les feuillets dudit composé inorganique.

10. Câble d'énergie Moyenne à Haute Tension continue selon l'une quelconque des revendications 1 à 7, la couche de revêtement comprenant au moins un écran semi-conducteur, caractérisé en ce que l'écran semi-conducteur est constitué essentiellement d'un matériau comprenant un composé inorganique à structure feuilletée et un composé organique inséré entre les feuillets dudit composé inorganique.

11. Procédé de fabrication d'un câble d'énergie selon l'une des revendications précédentes, comprenant la réalisation dudit matériau par les étapes suivantes :
- on traite ledit composé inorganique par un agent de manière à assurer sa compatibilité avec ledit composé organique,
- on mélange ledit composé inorganique traité avec ledit composé organique à une température supérieure à la température de ramollissement ou de fusion dudit composé organique,
- on obtient ledit matériau, ledit composé organique étant insérée entre les feuillets dudit composé inorganique.

12. Procédé selon la revendication 11, dans lequel ledit composé inorganique est une argile et ledit agent compatibilisant est choisi parmi un sel d'ammonium quaternaire, et un oxyde de polyéthylène et un dérivé phosphoré.
